# EUROPEAN PATENT SPECIFICATION

(11) **EP 1 410 634 B1**
(45) Date of publication and mention of the grant of the patent: **27.07.2011**
(21) Application number: 02717251.9
(22) Date of filing: 28.03.2002
(51) Int. Cl.: H04N 7/16

(54) **System and method for inserting graphics in a video signal**
System und Verfahren zum Einfügen von Grafikelementen in ein Videosignal
Système et méthode pour l'encastration d'éléments graphiques dans un signal vidéo

(30) Priority: 02.07.2001 NZ 51269301
(43) Date of publication of application: 21.04.2004
(73) Proprietor: Veitch, Graham Charles, Greenhithe, Auckland 1311 (NZ); Cameron, Kay Marie, Greenhithe, Auckland 1311 (NZ)
(72) Inventor: Atkin, Paul Andrew, Burnside, Christchurch 8005 (NZ); Veitch, Graham Charles, Greenhithe, Auckland 1311 (NZ); Cameron, Kay Marie, Greenhithe, Auckland 1311 (NZ)
(74) Representative: Habasque, Etienne J. Jean-François
(86) International application number: PCT/NZ2002/000053
(87) International publication number: WO 2003/005718

(56) References cited:
- WO-A-00/78043
- WO-A-00/78046

## Description

### TECHNICAL FIELD

This invention relates to a system employing hardware and software components to synchronise information or actions to video media or footage. Specifically the present invention may preferably be adapted to apply graphics to or trigger content changes in live video transmissions for a specific broadcaster.

Reference throughout this specification will also be made to the present invention being used in this application. However, those skilled in the art should appreciate that other uses for the present invention are envisioned and reference to the above only throughout this specification should in no way be seen as limiting.

### BACKGROUND ART

Television stations and other broadcasters of video footage can apply graphics, text, logos or numerical information to the video footage they transmit. These graphics supply the viewer with additional information regarding the footage they are watching, and also provide a branding opportunity for the television station and other businesses involved with sponsoring particular video transmissions.

The application of graphics to video transmissions allows a broadcaster to apply their own logos or brands consistently over all their own transmissions, which immediately identifies for a viewer the transmitting broadcaster.

The application of such graphics can also be used as a revenue gathering operation by a broadcaster. By providing businesses with the option of having their logos or brands displayed within to particular video transmissions, a broadcaster can in turn receive a revenue stream from the sponsor or sponsors involved.

For example, in the case of live or international sports programming a broadcaster will want to highlight to their viewers its identity as a transmitter of the event and will also want to apply to the video footage logos and brands of a sponsoring business.

The application of such graphics can normally easily be achieved with existing graphics and software applications when the broadcaster generates the video footage or has control over its creation. For example, in the case of live video transmissions the broadcaster can control the camera shots employed to make up the footage and can ensure that the graphics they are applying are shown at the correct times during the transmission and over an appropriate background shot.

However, the application of customised graphics is more difficult when the broadcaster does not have direct control over the generation of the video footage or when the transmission to be made is generated by a third party broadcaster and is to be retransmitted live. In such instances the video footage may already have a third party or content generating broadcaster's graphics applied to it. A video generating broadcaster may apply their own logos and brands and those of their sponsors to video which is to be shown on other broadcasting networks who are supported by different sponsors. However, this type of footage is still retransmitted and rebroadcasted, as although it does incorporate incorrect branding information it still incorporates text or numerical information of interest to viewers (such as for example, the current score in a game and the time left in a half or quarter of the game).

Where this video footage has not been transmitted on directly live, the end broadcaster can apply their own graphics over the existing graphics of the generating broadcaster. The end broadcaster can block unwanted graphics but in turn will cut out a significant portion of the screen image shown to their viewers. In the case of live transmissions there is very little that an end broadcaster can do to remove the generating broadcaster's graphics.

If the transmission is seen as of high importance to the end broadcaster they may not use such "dirty feeds" supplied by the generating broadcaster with its own graphics applied, and instead may site their own transmission equipment at the venue where the live transmission is to be made from. Such on-site equipment may receive a "clean feed" of the video footage generated and apply graphics to the clean feed appropriate to the remote or end broadcaster. This is called a unilateral outside broadcast in the industry which not only requires separate on-site facilities, but also dedicated microwave links and satellite circuits. The infrastructure and hardware required in such an undertaking is very expensive.

The personnel working with such equipment do not have the same control over which shots are employed to make up the video footage as the generating broadcaster, nor do they have any prior knowledge of when particular camera shots that will be employed. This lack of information means that guesses or estimates must be made by the personnel on site as to when their own graphics should be applied and for how long these graphics should be applied. Furthermore, as the transmissions made are live there is no facility for the personnel involved to take their time and ensure a correct match of graphics to the right background shot and for the appropriate period of time is be made.

WO-A-00/78043 describes an automatic control of broadcast and execution of interactive applications to maintain synchronous operation with broadcast programs.

WO-A-00/78046 describes a method for distributing a television content over a network.

US-A-5 818 512 discloses a system for investing graphics in a video signal.

An improved video graphics application system which addressed any or all of the above problems would be of advantage. A system which could consistently apply graphics with the same look and feel between transmissions made by an end broadcaster and which eliminated the need for end broadcasters to retransmit "dirty feeds" from generating broadcasters would be of advantage. A system that could also be used to apply customised sponsorship graphics for a particular end broadcaster and yet which could still transmit text or graphical information originally prepared for the video footage by a generating broadcaster would be of advantage. Such a system would give a broadcaster a point of difference with respect to their competitors and the ability to generate and improve sponsorship revenue.

Similar control issues also present problems for end broadcasters in situations other than in the application of graphics to video transmissions. The end broadcaster has no control over the content of a video transmission nor are they given any warning as to when such content will change character or, for example, when an advertising break will be inserted by the generating broadcaster into the transmission made. An end broadcaster cannot synchronise their own actions or processes with such video transmissions due to these lack of control issues.

For example, in some instances the generating broadcaster may transmit their own advertising messages within a short break in the content of interest to viewers. The end broadcaster preferably would like to immediately roll a pre-recorded tape of their own sponsors advertising messages instead of rebroadcasting the generating broadcaster's advertising. An improved video transmission synchronisation system which allowed for the triggering of processes, equipment or actions at the end broadcaster's site which were synchronised with the content of generating broadcaster's transmissions would be of advantage.

In addition, transmissions made by generating broadcasters only contain additional information for the viewer present in the graphics supplied to the video and also the content of the video itself. All the information to be presented to viewers must therefore be present in such video transmissions. In some instances it would be preferable to transmit a clean video and audio feed, and to transmit separate to this feed information or data particular to the content of the video transmission.

It is an object of the present invention to address the foregoing problems or at least to provide the public and/or broadcasters and television rights holders with a useful choice.

Further aspects and advantages of the present invention will become apparent from the ensuing description that is given by way of example only.

It is an object of the present invention to address the foregoing problems or at least to provide the public with a useful choice.

Further aspects and advantages of the present invention will become apparent from the ensuing description that is given by way of example only.

### DISCLOSURE OF INVENTION

According to the present invention there is provided a graphics application system and method adapted to apply graphics to video transmissions as defined in the independent claims.

Preferred embodiments are detailed in the dependent claims.

Preferably the present invention employs two or more distinct channels or paths for information to be provided. Video footage may be transmitted separate to additional trigger signals employed by the present invention, either through separate transmission infrastructure or encoded as distinct signal portions, within a single transmission using a single transmission infrastructure. Furthermore, the information communications channel may also be implemented through transmissions of different types of information over numerous separate signal transmissions. This separation of signal types allows an improved degree of flexibility with regard to processes to be executed in association with the content of the video footage.

These distinct channels or paths can be used to carry different types of information or content. For example, in a preferred embodiment one channel, defined as a video communication channel can be used to carry video transmissions. Furthermore, a second channel, defined as an information communications channel can be used to carry other information associated with the content of the video transmission. In preferred embodiments this information communications channel may carry trigger signals employed in conjunction with the present invention.

Such a synchronisation system may incorporate both the video communications channel and information communcations channel together into a single transmission with encoding schemes being used to separate the information channels provided.

Alternatively, in another embodiment two separate substantially simultaneous transmissions may be used to provide the video communications channel and information communications channels required.

In a further preferred embodiment the video communications channel may also have additional data or information encoded into it in addition to the provision of a separate information communications channel. Preferably this additional data may provide further information regarding the content of the video transmitted.

However, in alternative embodiments this additional data or information may not necessarily be encoded within a video communications channel. For example, in other embodiments this type of data information may be sent separate from the video channel and may be encoded into or supplied within an information communications channel, or alternatively it may be provided through a separate channel or transmission in its own right.

Preferably the video transmissions are made via satellite systems. Satellites can be used to transmit video information large distances in relatively short periods of time.

The present invention includes an event detection system. Such a system may be used to monitor the content of video footage to be transmitted and to generate and transmit trigger signals based on events occurring in or the content of the video footage transmission. These trigger signals may be forwarded to other components of the invention to trigger the execution of processes associated with the video footage transmission.

In a preferred embodiment the present invention may also include or be associated with a data channel which can carry or transmit different information from the video communications channel and information communications channels discussed above. This data channel can carry further information which preferably may be the provided as input data to processes to be executed using the present invention. Furthermore, this data channel may also be implemented using the same transmission as the other channels involved, or alternatively in separate transmission or any combination of transmissions with the other channels if required. For example, in one embodiment both the data video and information channels may all be completed through coding in a single transmission, whereas in an alternative embodiment three separate transmissions may be employed to implement these three channels.

The present invention will in the main be described throughout this specification as being adapted to provide a graphics application system. Such a system may be used to apply graphics to video footage preferably to be broadcast live to a wide audience of viewers. Such graphics may provide additional information to viewers with regard to the content of the video footage, identity of the broadcaster or the sponsors involved with supporting the transmission made. Such a system may preferably be composed of elements of computer hardware and software which are adapted to execute the methodology discussed below and to apply graphics to video footage in a high quality manner.

Preferably the graphics applied using the present invention may be composed from both static and dynamic content. Static graphics may be applied easily using the present invention upon receipt of an appropriate trigger signal by the graphics application system. Furthermore, through the supply of additional data or information of a dynamic nature to the graphics application element this data or information may also be incorporated into graphics and applied to or used to modify a video transmission to display this dynamically changing information or data.

In preferred embodiments such a graphics application system may also be adapted to receive a video transmission. The graphics application system may then execute or trigger the execution of processes related to this video transmission.

However, in alternative embodiments the graphics application system provided need not necessarily directly receive a video transmission. For example, in other embodiments the video transmission may be received by associated or external hardware to the graphics application system with the graphics application system inked to this external hardware or components being used to control the execution or processes run by such external hardware.

In a preferred embodiment the present invention may be used to synchronise the application of graphics to the content of the video transmission.

Preferably the video transmissions to which graphics are to be applied may be television signal broadcasts. Such broadcasts may include live transmissions from remote scenes, sports broadcasts, or current events programming for example. In the case of sports broadcasts statistics and numerical information in relation to a competition may be displayed within the graphics applied to give viewers an up to date picture of the state of the competition. For live transmissions the graphics may include information which is not immediately available to a presenter on the scene. Alternatively, for current events programming further text information may be applied in unobtrusive areas of the screen to give viewers who have recently tuned in programming an idea of which issues are being discussed. Graphics may also be applied in some embodiments which have no direct relationship to the actual content of the video footage transmission. Such graphics may be applied when a broadcaster wishes to communicate important information to their viewers without necessarily interrupting the current programme being broadcast.

However, those skilled in the art should appreciate that video transmissions as referred to throughout this specification need not necessarily be limited to television signal broadcasts. Any other type of video transmission may employ the present invention, such as for example web cast video transmissions.

Reference throughout this specification will also be made to a generator of video footage transmitting such footage to an end broadcaster. A generating broadcaster as discussed throughout this specification may be any entity, organisation or person which generates video footage to be transmitted to another broadcaster for further retransmission to that broadcaster's viewers. Furthermore, reference will also be made to an end broadcaster throughout this specification where such an entity may be defined as any person, organisation or group which is involved with broadcasting or transmitting, or retransmitting video footage to a plurality of viewers. Furthermore, the present invention may also allow a single generating broadcaster to supply video footage transmissions to a plurality of end broadcasters where this plurality of end broadcasters may apply their own customised graphics to such video transmissions.

Reference throughout this specification will also be made to the video footage transmissions being live transmissions of sporting events. However, those skilled in the art should appreciate that other types of video footage may also have graphics applied using the present invention and reference to the above only throughout this specification should in no way be seen as limiting.

The present invention may preferably be adapted to easily apply graphics correctly to live sporting transmissions. Such programming includes a significant amount of numerical data or information which viewers find helpful and which can be incorporated with the graphics to be displayed. The present invention also seeks to alleviate the problems associated with a remote "generating" broadcaster of the video footage applying their own customised graphics to the transmission which is in turn retransmitted live by the "end" broadcaster.

Preferably the graphics applied may include alpha numeric text and/or data. Such graphics may also include logos, pictures and/or advertising material.

Such graphics may also display information relating to the content of the video transmission to which the graphic is applied.

In a preferred embodiment graphics applied to the video footage may give information in relation to the current state of play of the sporting event transmitted. Graphics preferably may also include an identification logo or brand of the end broadcaster and also the brands or logos of any sponsoring business involved with the delivery of the sports event programming.

However, those skilled in the art should appreciate that the graphics applied need not necessarily be limited to those discussed above nor limited to video footage transmissions of sporting events. For example, in some instances the present invention may be interfaced to or incorporated with telestrader equipment. Such equipment normally provides a "scratch pad" for commentators to sketch on the video pictures transmitted to viewers. In such instances the trigger signals employed in conjunction with the present invention may give information with regard to where on the viewer's screen pixels making up the telestrader sketches should be applied.

Alternatively, in other embodiments the present invention may be interfaced with teleprompter equipment. Trigger signals incorporating text or other types of information to be supplied to a teleprompter, synchronised with the content of a video transmission.

The trigger signals received in the graphics application system indicate or identify a type of graphic to be applied to a video transmission. The timing of the reception of the trigger signal may in turn trigger the application of the specific graphic identified to the video transmission.

In another embodiment a trigger signal received may be associated with a particular type of input data also to be incorporated within a graphic. A trigger signal may also indicate that a specific type of data or information should be obtained and incorporated into an identified graphic and applied to the video transmission. This data or information may change dynamically over time and can be supplied as part of the information transmitted using a data communications channel, associated with the present invention.

In some instances the graphics application system may be adapted to receive input data which is to be incorporated into a graphic. In such instances a partly complete graphic template can be prepared prior to the reception of a video transmission and this template may be combined with input data received to generate the final graphic to be applied.

In a further preferred embodiment the bulk of the graphics applied may be substantially predetermined before the live transmission is made. These graphics when applied may include data or information particular to the live event occurring and this data or information may be "plugged into" the preformed graphics as the event occurs. The preformed nature of such graphics may provide a number of separate templates for specific collections of information, where for example details of specific players or competitors performances, details of performance of a team on the whole, details of the current score and time left in a sports game may all be shown in separate graphics. Separate graphics templates may be prepared in advance for each particular collection of information and the appropriate data or information may be added to the graphics in real time when it becomes available.

In a further preferred embodiment data or information to be displayed to viewers within graphics may be directly related to or associated with the content of the video transmission as in the case of sports events footage. However, it is also possible to apply graphics and incorporate information into graphics that has no direct relationship to the content of the video transmission. For example in some instances graphics may be applied which advise the viewers to an important event and timing of a special bulletin to update viewers without necessarily interrupting the current video programming.

In a further preferred embodiment the information or data incorporated into the graphics may be generated or supplied from the generating broadcaster of the sport event transmission. Preferably this information may be transmitted without necessarily being applied as a graphic onto the video footage transmitted to the end broadcaster.

In a preferred embodiment a graphics application system may be implemented through use of a computer system loaded with computer software. However, those skilled in the art should appreciate that other implementations of the graphics application system are envisioned and reference to the above only throughout this specification should in no way be seen as limiting.

The present invention also includes an event detection system used in conjunction with the process execution element or graphics application system substantially as described above. Such an event detection system may be adapted to receive an event signal from an operator or electronic components and in response to this event signal can be adapted to transmit a trigger signal.

Such an event detection system may preferably be provided at a sports fixture or other event that is to be filmed to create the video footage transmission. Such an event detection system may respond to events occurring in this area and recorded within the video transmission made. Events which the event detector system may respond to may preferably be any action or activity which prompts the application of a graphic to be displayed to the end broadcaster's viewers. An event may also be defined as a situation or time where a graphic currently being displayed to viewers should be removed from the video footage transmitted.

Such an event detection system may be constructed or configured in a number of different ways.

The event detection system does not require an operator to detect particular events and generate an event signal that triggers the application or removal of graphics from a video transmission. For example, in one alternative embodiment the event detection system may be interfaced with or may communicate with an electronic graphics package employed by the generating broadcaster to apply their own customised graphics to video footage. Such graphics packages may provide automated electronic event signals to the event detection system to indicate when a graphic is being applied or removed from the video footage and also the type of graphic which is being applied or removed.

In a preferred embodiment the event detection system is adapted to receive an "event" signal from electronic components as discussed above, and in response to such a signal may generate and transmit a trigger signal for a remote graphics application element associated with an end broadcaster. Furthermore, an event signal can be generated depending on the content of the video footage which is monitored by the event detection system.

Such a trigger signal is associated with or coded to particularly identify one type of graphic to be applied to the video footage. For example, in one instance where points are scored by one team in a sporting match a trigger signal may be generated which indicates that the graphic associated with displaying the current score of the match should be applied to the video footage transmitted by the end broadcaster.

Such trigger signals are coded to be associated to a particular type of information with a graphic coded trigger signal being provided for each type of graphic to be applied.

Preferably the event detection system may include a computer system or other programmable logic devices which can be programmed with software that can perform the functions required of the event detection system. Such a computer system may also be associated with appropriate transmission systems or infrastructure adapted to both generate and transmit appropriate trigger signals depending on events being recorded into video footage transmitted.

In a further preferred embodiment an event detection system may be formed from and incorporate a standard personal computer with an appropriate network interface card and circuitry installed in addition to two modem based communication systems. In instances where the event detection system is employed within the graphics application scheme, the computer used may also incorporate a video card, and also in some instances a VBI encoding system allowing information to be encoded into the actual video transmission made by the generating broadcaster.

Preferably trigger signals, video footage transmissions and information or data signals from the generating broadcaster may all be transmitted to a graphics application element incorporated into or associated with the present invention. Such a graphics application element may use the information and signals transmitted to it to apply the appropriate graphics to video footage for display to the end broadcaster's viewers.

The video footage transmissions to the graphics applications element may use any known type of transmission infrastructure or system applicable or available. For example, in a preferred embodiment where live transmissions of sports events are made satellite based transmissions from the generating broadcaster to the end broadcaster may be used. However, in alternative embodiments satellite transmissions may not necessarily be required to transmit a video footage between two broadcasters. For example, in one alternative embodiment such transmissions may be made by fibre optic cabling if required.

Reference throughout this specification will also be made to the transmission of video footage being made via satellite. However those skilled in the art should appreciate that other types of transmission systems may also be employed if required and reference to the above throughout this specification should in no way be seen as limiting.

In a preferred embodiment data or information signals may also be transmitted from the generating broadcaster to the end broadcaster. Such signals may give numerical or statistical information in relation to the footage involved and preferably may be incorporated into the graphics to be applied to the footage. Such data or information may be transmitted to the end broadcaster any number of ways. For example, in a preferred embodiment such numerical data may be encoded into the same signal transmission used to transfer the video footage between the generating and end broadcasters. Minimal additional bandwidth may be used to also incorporate this information into the video footage signal, which can eliminate the need for an additional communications channel to be established or employed for this information.

Reference throughout this specification will also be made to the numerical data or information being incorporated into graphics also being encoded directly into the footage transmission. However those skilled in the art should appreciate that this information may be transmitted in other ways and reference to the above only throughout this specification should in no way be seen as limiting. For example, in one alternative embodiment this numerical or statistical information may be transmitted via an Internet link to the end broadcaster.

In a preferred embodiment trigger signals generated by the event detection system may be transmitted to the end broadcaster's graphics application element independent from transmissions of video footage. Preferably a computerised Internet based transmission protocols may be used to transfer or transmit trigger signals to a graphics application element. Through use of Internet connections an existing transmission infrastructure may be employed which is also readily available throughout the developed world. Furthermore, by using an external transmission infrastructure there is no need for the graphic application system to interface directly with the generating broadcaster's own hardware or systems. Complete independence may be preserved between the two or more broadcasters involved and problems associated with interfacing incompatible types of electrical equipment are not experienced.

However, those skilled in the art should appreciate that other types of transmission systems may also be employed if required. For example, in alternative embodiments trigger signals may also be incorporated into the video transmission signal itself using for example audio or VBI encoding into such a signal. Those skilled in the art should appreciate that numerous different times of transmission may be employed if required.

The graphics application element will on receipt of a trigger signal apply a specific graphic to the video footage transmitted to it. The graphic applied is identified from the specific form or coding of the trigger signal which should also indicate the type of any other data or information also to be incorporated into the graphic. As discussed above preformed templates for each graphic may be prepared before the transmission is received by the end broadcaster, and may have the numerical data or information incorporated. As this numerical data will vary depending on the outcomes of the sporting event there can be limited pre-preparation and incorporation of this information into a graphic before the live event occurs.

In a preferred embodiment the graphics application element may be formed from or incorporate a computer system or any other form of programmable logic device. Such components may be programmed with appropriate software to allow them to operate effectively to achieve the aims of the present invention. A graphics application element may also include connections to or be associated with the appropriate transmissions systems to allow for the reception of trigger signals, video footage transmissions and also any other signals which incorporate numerical data information, or any other types of information associated with the content of the video signal.

In a further preferred embodiment a graphics application element may be formed from a computer system which has installed an appropriate network interface card or circuitry as well as a "dial-up" modem, and ADSL modem. Such a computer system may, (when used in a graphics application system) employ a VBI decoder for information encoded into video signals transmissions and also a video output card or circuitry.

In a further preferred embodiment such components of the invention may also be interfaced with existing graphics application systems well known in the art. For example a graphics application element may be interfaced with conventional front end graphics application systems produced by Chyron, SGI or Aston.

In further preferred embodiments of the present invention the transmission systems used to transmit trigger signals may also be used to transmit data or information not directly related to the actual events occurring in or content of the video transmission involved. The transmission infrastructure and links employed to transmit trigger signals may also be recycled or re-used to transmit additional information which is not time sensitive nor needing synchronisation with the video transmission involved. The bandwidth employed to transmit trigger signals may therefore be employed to transfer other types of information if required.

The present invention provides many potential advantages over the prior art.

The present allows processes or actions to be synchronised with the actual content of a video transmission by an end broadcaster. Numerous different types of machinery and components may be employed to use the trigger signals discussed above to execute processes or actions that need to be synchronised with the content of the video transmission made.

A graphics application system as configured in accordance with the present invention may provide many potential advantages over the prior art.

The present invention limits the amount of equipment and personnel which need to be located remote from an end broadcaster for the end broadcaster to be able to consistently apply its own graphics to a video transmission. Preferably the event detector system employed may receive detailed information from the generating broadcaster with regard to when graphics should be applied and will generate appropriate trigger signals to ensure that appropriate graphics are applied to the video footage retransmitted by the end broadcaster.

Furthermore, the present invention can ensure that the timing of the graphics application is correct through reference to the trigger signals received by the graphics application element employed. Through operation of the present invention graphics customised by and specific to the end broadcaster may be applied to the video transmissions it makes irrespective of the actual source of such video transmissions. Furthermore, the timing at which such graphics are applied to the video footage may be accurately controlled even for live transmissions which end broadcaster has no immediate control over.

The present invention may also allow different graphics generation and control functions to occur at different locations based on one or more sets of data and trigger signals being produced. This enables a lowering of resources required at the source of the video transmission and an increase in functionality or services available for both the generating and end broadcaster or broadcasters.

### BRIEF DESCRIPTION OF DRAWINGS

Further aspects of the present invention will become apparent from the following description that is given by way of example only and with reference to the accompanying drawings in which:
- Figure 1: shows a block schematic diagram of the processes executed and information flows managed by a video synchronisation system formed in accordance with a preferred embodiment of the present invention; and
- Figure 2: shows information flows and processes managed by a graphics application system configured in accordance with a further embodiment of the present invention, and
- Figure 3: shows the information flows and processes executed by a graphics application system configured in accordance with yet another embodiment of the present invention.
- Figure 4: shows the information flows and processes executed by a graphics application system configured in accordance with a further embodiment of the present invention.
- Figures 5 and 6: shows screen shots of different types of graphics applied to different video footage transmissions using a graphics application system formed in accordance with a preferred embodiment of the present invention.

### BEST MODES FOR CARRYING OUT THE INVENTION

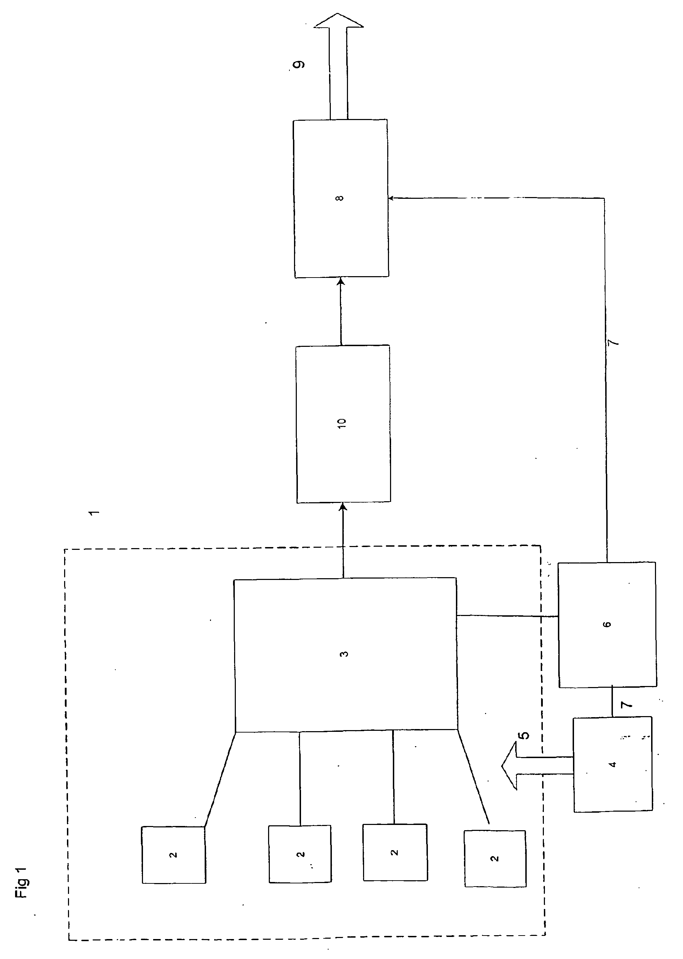

Figure 1 shows a block schematic diagram of the information flows and processes executed by a video synchronisation system configured in accordance with a preferred embodiment of the present invention. In the embodiment shown the Video Synchronisation System is adapted to provide a graphics application element.

In the instance shown an outside or generating broadcaster 1 employs a number of cameras 2 to generate the video footage of a sporting event where these cameras supply this footage to control broadcasting truck 3. The control truck 3 then selects and assembles the footage generated by each camera 2 into a single video transmission which supplied to a known graphics application component 4 operated by the end broadcaster 1. The graphics application component 4 will apply customised graphics specific to the generating broadcaster 1 to the video footage it is supplied with. The graphics applied will incorporate numerical data regarding the sporting event currently occurring and will supply this information in an output broadcast 5 to the generating broadcaster's own viewers.

An event detection system 6 incorporated within the present invention is interfaced with the generating broadcaster's control truck 3. The event detection system has access to the video footage generated but without the customised graphics to be applied by the generating broadcaster for their own viewers. The event detection 6 will monitor the video footage recorded and the sports event itself, and generate trigger signals 7 in response to particular events being filmed and present in the video footage.

Trigger signals 7 are generated and transmitted to a remote process execution element, formed in this embodiment as a graphics element 8. Each trigger signal 7 may be coded to associate specific trigger signals with specific events. The coding of the trigger signal will indicate that a particular event has occurred within the sporting fixture and that an appropriate graphic should be displayed within a final output video transmission 9 transmitted to an end broadcaster's viewers.

These trigger signals are in turn used to drive or secure the operation of the generating broadcaster's graphics application component fore. In receipt of the particular trigger signals generated the graphics application component 4 will apply customised graphics specific to the generating broadcaster 1 to the "clean feed" video footage it is also supplied with.

A video footage transmission system 10 is also employed to transmit the video footage prepared by the generating broadcaster 1 through to the remote location at which the end broadcaster is sited. The transmission system 10 may receive video footage which has not had the generating broadcaster's own graphics applied to it and will supply a "clean feed" video signal to the graphics application element 8. Incorporated into this clean feed signal will also be numerical data or statistics associated with the sports event being filmed.

The graphics application element 8 will receive the clean feed video footage and will transmit this on through other components of the end broadcaster (not fully shown), to the end broadcaster's viewers. Upon reception of an appropriate trigger signal 7 the graphics application element 8 will also apply an appropriate graphic to the final output video footage 9. The graphic to be displayed will be identified by the particular form of the trigger signal received and will also include appropriate numerical or statistical data for that particular type of graphic.

As the graphics application element 8 is working with a clean feed the graphics applied will be customised for or specific to the end broadcaster's requirements. Such graphics may show identification logos for the end broadcaster and also the brands or logos of any sponsors involved with supporting the particular sporting event being transmitted.

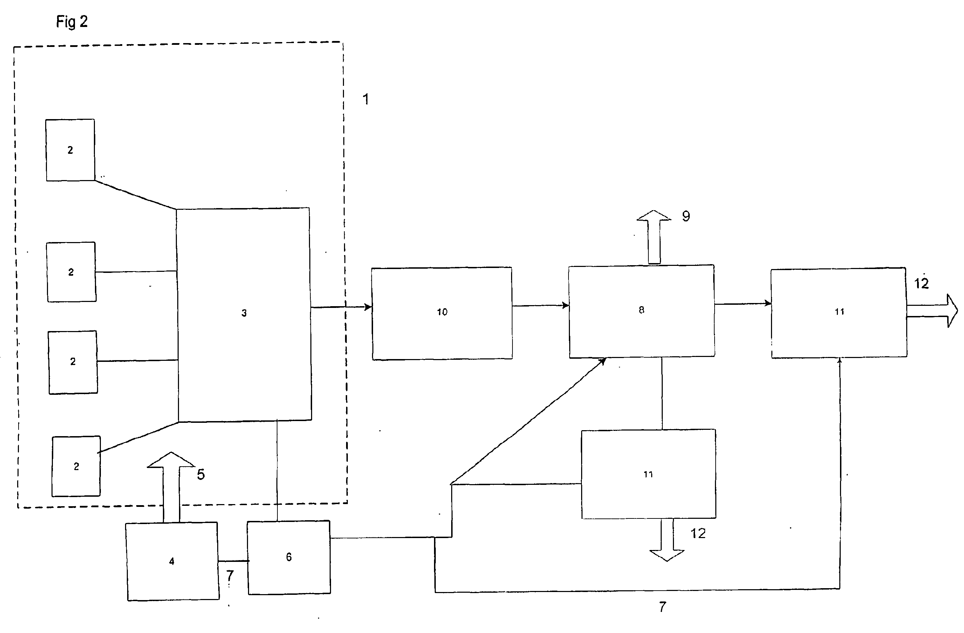

Figure 2 shows another block schematic diagram of the operation of a graphics application system as configured in accordance with an alternative embodiment to that shown with respect to Figure 1.

Figure 2 shows a slightly more complicated implementation of the graphics application system shown with respect to Figure 1. The elements employed and operated by the outside broadcaster 1 are substantially the same as that discussed with respect to Figure 1. In addition the system still employs an event detection system 6 capable of transmitting a number of trigger signals 7 in response to particular events being recorded within the video footage supplied by the generating broadcaster 1. Again a video footage transmission system 10 is employed to supply a clean feed transmission signal from the generating broadcaster 1.

However, in the instance shown with respect to Figure 2 a facility is also provided for affiliated broadcasters to the end broadcaster to also be supplied with the clean feed video signals and the trigger signals from the event detection system 6. A further or second graphics application element 11 is also provided within the affiliated broadcaster. This second graphics application element 11 again receives trigger signals 7 from the event detection system 6 and generates its own "dirty feed" output signal 12 for its own viewers. The output video footage signal or transmission 12 of the affiliate broadcaster will incorporate graphics applied by the second graphics application element 11 which are customised to the affiliate broadcaster's requirements and associated sponsors.

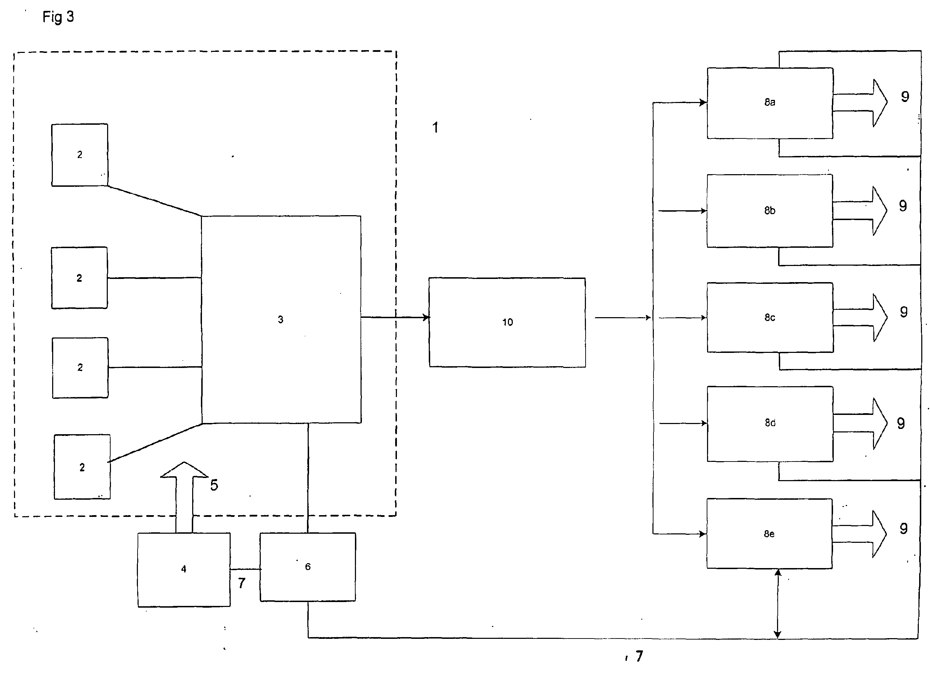

Figure 3 shows yet another implementation of a graphics application system formed in accordance with a further alternative embodiment of the present invention. Again some similarities with respect to the system shown in Figures 2 and 3 but in the instance shown with respect to Figure 3 a plurality of outside broadcasters are serviced by the same graphics application system.

In the embodiment shown again the generating broadcaster provides a clean feed video signal to a transmission system 10. The transmission system 10 in turn transmits this clean feed signal to five separate end broadcasters - preferably all located geographically remote from one another. Again the event detection system generates a number of trigger signals 7 which are in turn supplied to graphics application element 8a to 8e sited with each end broadcaster involved.

Each graphics application element 8 is also supplied with a clean feed video signal of the video footage generated by the outside broadcaster 1. Each broadcaster can generate their own output video signal 9 with customised graphics applied that identify both the end broadcaster and their sponsors associated with the particular video footage transmitted.

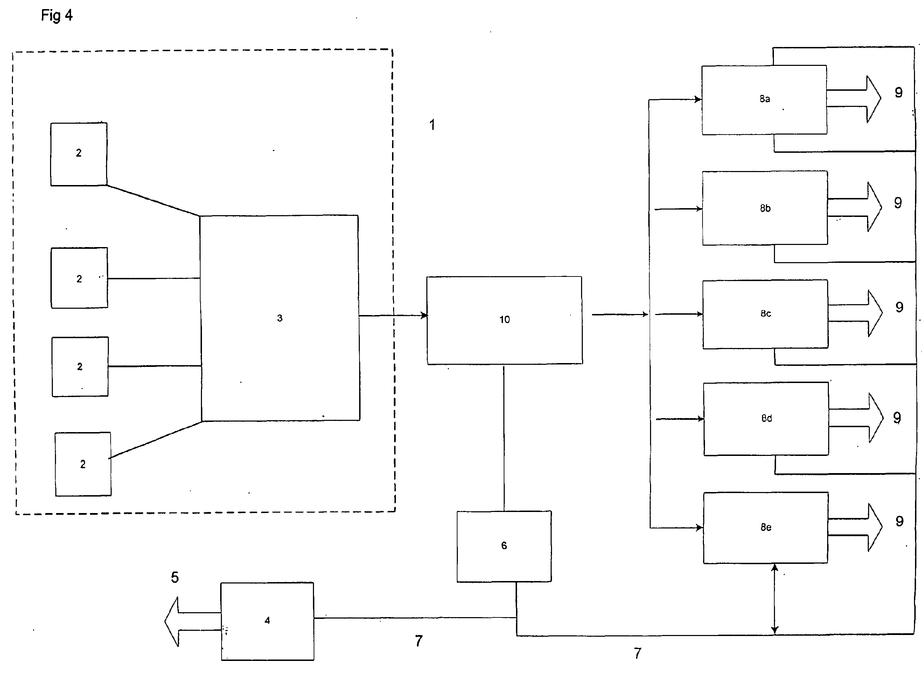

Figure 4 shows yet another implementation of a graphics application system formed in accordance with another embodiment of the present invention. Some similarities are again present with respect to the system shown in figure 3, but in the instance discussed with respect to figure 4 the event detection system 6 is located remote from a generating broadcaster. In this instance the event detection system 6 is linked to a clean feed video transmission supplied through video footage transmission system 10.

The event detection system 6 still generates a series of trigger signals 7 which are in turn again supplied to the generating broadcaster's graphics application component 4 and also a number of additional graphics application elements Sa through 8e. The event detection system in this instance works through monitoring the clean feed video transmission and in turn rapidly issuing trigger signals to control each of the graphics application elements as the content of the video transmission changes.

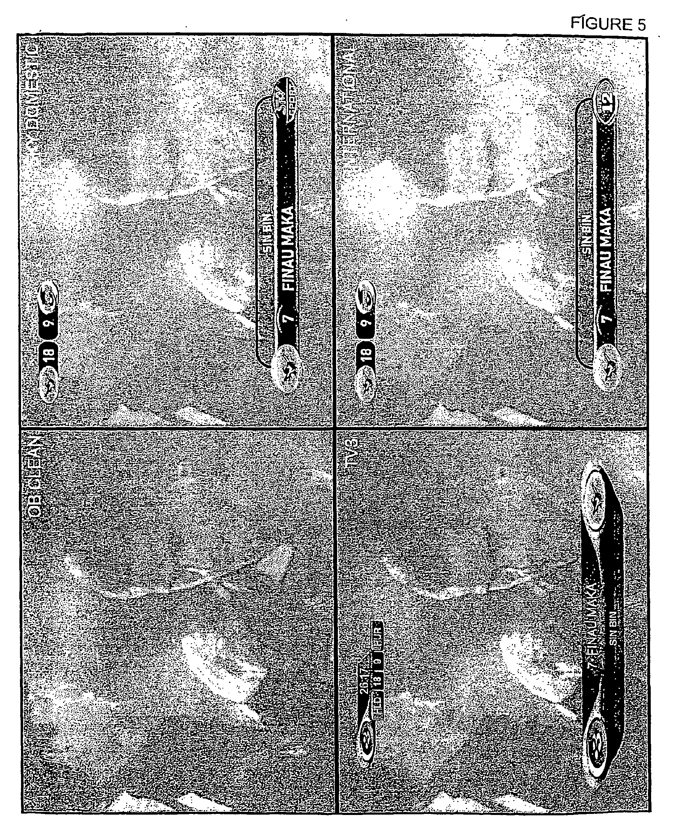

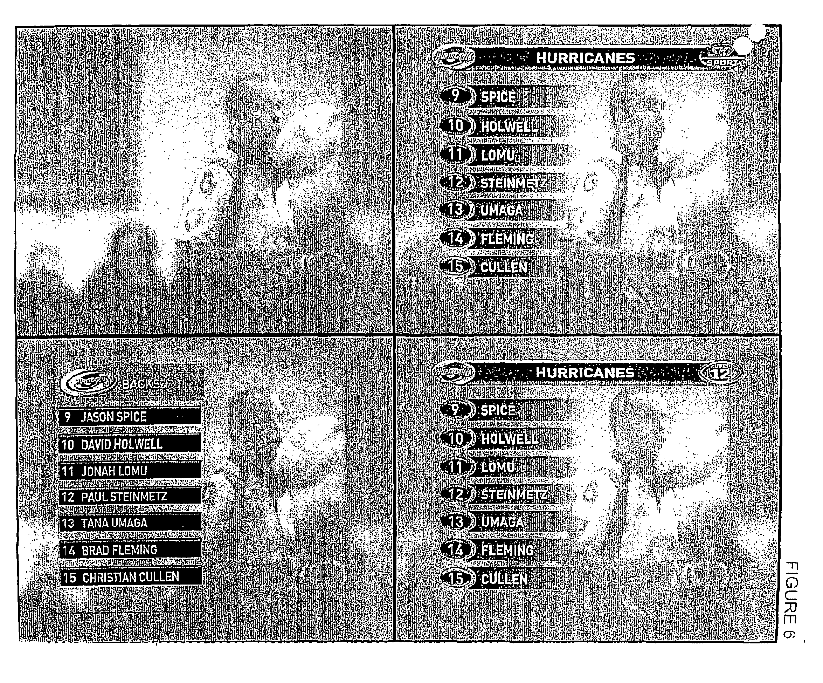

Figures 5 and 6 show a number of different video footage feeds with different types of graphics applied to these feeds. These graphics can be applied by a graphics application system formed in accordance with a preferred embodiment of the present invention.

The screen shot shown at the top left of Figure 5 is the clean video feed from the generating or outside broadcaster. Three other separate video footage transmissions are then generated using the present invention for three different audiences. For example, as shown with respect to Figure 5 the SKY Domestic and SKY International transmissions both incorporate graphics appropriate to the SKY broadcasting arms for both the player name field and also the game status indicator at the top left of the picture. Conversely, the graphics generated for the TV 3 broadcaster at the bottom left of the figure a different form of graphic for the player name information and also for the game status graphics.

Figure 6 shows different graphics being applied which give player name details for one side involved in a sports match. Different forms of graphics are applied to the original generating broadcasters clean feed as shown at the top left of the figure. The format of the graphics text applied for each broadcaster vary to include different text formats and also different logos and colour schemes for the different broadcasters and their sponsors.

## Claims

1. A graphics application system adapted to apply graphics to a television signal broadcast including video footage containing a live activity, wherein the system includes,
an event detection system (6) adapted to monitor the live activity in the video footage for specific events and to generate and transmit a trigger signal (7) upon detection of a specific event, wherein the trigger signal (7) is one of a plurality of different types of trigger signals (7), each type including coding information for determining both the form and the content of at least one graphic to be applied to the television signal, where the type of the trigger signal (7) transmitted is determined by the specific event in the live activity in the video footage ;
a graphics application element (8;8a,8b,8c,8d,8e; 11) located remotely from the event detection system (6) and adapted to receive the television signal containing said video footage and to receive said one of said plurality of different types of trigger signals (7) transmitted from the event detection system (6), wherein the graphics application element (8;8a,8b,8c,8d,8e;11) applies at least one of a plurality of graphics to the television signal to produce a modified television signal in response to the reception of said trigger signal (7) and its type , where the type of trigger signal (7) determines the type of graphic applied and its contents, said graphics being applied prior to the broadcast of the modified television signal to a plurality of viewers.

2. A graphics application system as claimed in claim 1 wherein the graphics applied includes alpha numeric text and/or data.

3. A graphics application system as claimed in claim 1 wherein the graphics include logos, pictures and/or advertising material.

4. A graphics application system as claimed in claim 1 wherein partially complete graphic templates are prepared prior to the reception of the television signal by the graphics application system.

5. A graphics application system as claimed in claim 1 said system being integrated within telestrader equipment wherein trigger signals (7) indicate where telestrader markings are to be applied to the television signal.

6. A graphics application system as claimed in claim 1 which is implemented through use of a computer system loaded with computer software.

7. A method of applying graphics to a television signal including video footage containing a live activity, comprising the steps of:
(i) monitoring the live activity in the video footage for specific events; with an event detection system;
(ii) generating and transmitting one of a plurality of different types of trigger signals , each type including coding information for determining both the form and the content of at least one graphic from an event detection system (6) upon detection of a specific event, where the type of trigger signal (7) transmitted is determined by the specific event within the live activity in the video footage, and
(iii) receiving the television signal and the transmitted trigger signal (7) with a graphics application element (8;8a,8b,8c,8d,8e;11) located remotely from the event detection system (6), and
(iv) applying one of a plurality of graphics to the television signal using the graphics application element (8;8a,8b,8c,8d,8e;11) to produce a modified television signal, where the type of trigger signal (7) received determines the type of graphic applied and its contents, and
(v) subsequently broadcasting the modified television signal to a plurality of viewers.

## Patentansprüche

1. Einsatzsystem für Grafikelemente, das ausgebildet ist, Grafikelemente in eine Fernsehsignalsendung einzusetzen, die Live-Aktivität enthaltendes Videomaterial umfasst, wobei das System umfasst
ein Ereignisdetektionssystem (6), das ausgebildet ist, die Live-Aktivität in dem Videomaterial auf spezifische Ereignisse zu überwachen und bei Detektion eines spezifischen Ereignisses ein Trigger-Signal (7) zu erzeugen und zu übertragen, wobei das Trigger-Signal (7) eines von einer Vielzahl von unterschiedlichen Typen von Trigger-Signalen (7) ist, wobei jeder Typ Kodierungsinformation zum Bestimmen sowohl der Form als auch des Inhalts von zumindest einem Grafikelement, das in das Fernsehsignal eingesetzt werden soll, umfasst, wobei der Typ des Trigger-Signals (7), das übertragen wird, durch das spezifische Ereignis in der Live-Aktivität in dem Videomaterial bestimmt ist,
ein Einsatzelement für Grafikelemente (8; 8a, 8b, 8d, 8e; 11), das entfernt von dem Ereignisdetektionssystem (6) angeordnet und ausgebildet ist, das Fernsehsignal, das das Videomaterial enthält, zu empfangen, und den einen von der Vielzahl von unterschiedlichen Typen von Trigger-Signalen (7), der von dem Ereignisdetektionssystem (6) übertragen wird, zu empfangen,
wobei das Einsatzelement für Grafikelemente (8; 8a, 8b, 8c, 8d, 8e; 11) zumindest eines von einer Vielzahl von Grafikelementen in das Fernsehsignal einsetzt, um in Ansprechen auf den Empfang des Trigger-Signals (7) und seines Typs ein modifiziertes Fernsehsignal zu erzeugen, wobei der Typ des Trigger-Signals (7) den Typ von eingesetztem Grafikelement und seine Inhalte bestimmt, wobei die Grafikelemente vor dem Senden des modifizierten Fernsehsignals an eine Vielzahl von Zuschauern eingesetzt werden.

2. Einsatzsystem für Grafikelemente nach Anspruch 1, wobei die eingesetzten Grafikelemente alphanummerischen Text und/oder Daten umfassen.

3. Einsatzsystem für Grafikelemente nach Anspruch 1, wobei die Grafikelemente Logos, Bilder und/oder Werbematerial umfassen.

4. Einsatzsystem für Grafikelemente nach Anspruch 1, wobei vor dem Empfang des Fernsehsignals durch das Einsatzsystem für Grafikelemente teilweise vollständige Grafikelementvorlagen vorbereitet werden.

5. Einsatzsystem für Grafikelemente nach Anspruch 1, wobei das System in eine Telestrator-Ausrüstung integriert ist, wobei Trigger-Signale (7) angeben, wo Telestrator-Markierungen in das Fernsehsignal einzusetzen sind.

6. Einsatzsystem für Grafikelemente nach Anspruch 1, das unter Verwendung eines Computersystems, in das Computer-Software geladen ist, implementiert ist.

7. Verfahren zum Einsetzen von Grafikelementen in ein Fernsehsignal, das Videomaterial umfasst, das Live-Aktivität enthält, mit den Schritten, dass:
(i) die Live-Aktivität in dem Videomaterial mit einem Ereignisdetektionssystem auf spezifische Ereignisse überwacht wird;
(ii) einer von einer Vielzahl von unterschiedlichen Typen von Trigger-Signalen erzeugt und übertragen wird, wobei jeder Typ Kodierungsinformation zum Bestimmen sowohl der Form als auch des Inhalts von zumindest einem Grafikelement von einem Ereignisdetektionssystem (6) nach Detektion eines spezifischen Ereignisses umfasst, wobei der Typ von Trigger-Signal (7), der übertragen wird, durch das spezifische Ereignis innerhalb der Live-Aktivität in dem Videomaterial bestimmt wird, und
(iii) das Fernsehsignal und das übertragene Trigger-Signal (7) mit einem Einsatzelement für Grafikelemente (8; 8a, 8b, 8c, 8d, 8e; 11), das fern von dem Ereignisdetektionssystem (6) angeordnet ist, empfangen werden, und
(iv) eines von einer Vielzahl von Grafikelementen in das Fernsehsignal unter Verwendung des Einsatzelements für Grafikelemente (8; 8a, 8b, 8c, 8d; 11) eingesetzt wird, um ein modifiziertes Fernsehsignal zu erzeugen, wobei der Typ von Trigger-Signal (7), das empfangen wird, den Typ von eingesetztem Grafikelement und seine Inhalte bestimmt, und
(v) das modifizierte Fernsehsignal anschließend an eine Vielzahl von Zuschauern gesendet wird.

## Revendications

1. Système d'application de graphique adapté pour appliquer des graphiques à une diffusion de signal de télévision incluant des séquences vidéo contenant une activité en direct, dans lequel le système inclut
un système de détection d'événement (6) adapté pour surveiller l'activité en direct dans les séquences vidéo pour des événements spécifiques et pour générer et transmettre un signal déclencheur (7) lors de la détection d'un événement spécifique, où le signal déclencheur (7) est l'un d'une pluralité de différents types de signaux déclencheurs (7), chaque type incluant des informations de codage pour déterminer à la fois la forme et le contenu d'au moins un graphique à appliquer au signal de télévision, où le type du signal déclencheur (7) transmis est déterminé par l'événement spécifique dans l'activité en direct dans les séquences vidéo ;
un élément d'application de graphique (8 ; 8a, 8b, 8c, 8d, 8e ; 11) situé à distance du système de détection d'événement (6) et adapté pour recevoir le signal de télévision contenant lesdites séquences vidéo et pour recevoir ledit un de ladite pluralité de différents types de signaux déclencheurs (7) transmis à partir du système de détection d'événement (6), où l'élément d'application de graphique (8 ; 8a, 8b, 8c, 8d, 8e ; 11) applique au moins l'un d'une pluralité de graphiques au signal de télévision pour produire un signal de télévision modifié en réponse à la réception dudit signal déclencheur (7) et de son type, où le type du signal déclencheur (7) détermine le type de graphique appliqué et ses contenus, ledit graphique étant appliqué avant la diffusion du signal de télévision modifié à destination d'une pluralité de spectateurs.

2. Système d'application de graphique selon la revendication 1, dans lequel les graphiques appliqués incluent du texte et/ou des données alphanumériques.

3. Système d'application de graphique selon la revendication 1, dans lequel les graphiques incluent des logos, des images et/ou de la publicité.

4. Système d'application de graphique selon la revendication 1, dans lequel des modèles graphiques partiellement complets sont préparés avant la réception du signal de télévision par le système d'application de graphique.

5. Système d'application de graphique selon la revendication 1, dans lequel ledit système est intégré au sein d'un équipement Teletrader dans lequel des signaux déclencheurs (7) indiquent où des marques Teletrader doivent être appliquées au signal de télévision.

6. Système d'application de graphique selon la revendication 1, qui est implémenté à l'aide d'un système informatique chargé d'un logiciel informatique.

7. Procédé d'application de graphique à un signal de télévision incluant des séquences vidéo contenant une activité en direct, comprenant les étapes consistant à :
(i) surveiller l'activité en direct dans les séquences vidéo pour des événements spécifiques avec un système de détection d'événement ;
(ii) générer et transmettre l'un d'une pluralité de différents types de signaux déclencheurs (7), chaque type incluant des informations de codage pour déterminer à la fois la forme et le contenu d'au moins une forme graphique provenant d'un système de détection d'événement (6) lors de la détection d'un événement spécifique, où le type de signal déclencheur (7) transmis est déterminé par l'événement spécifique au sein de l'activité en direct dans les séquences vidéo, et
(iii) recevoir le signal vidéo et le signal déclencheur transmis (7) avec un élément d'application de graphique (8 ; 8a, 8b, 8c, 8d, 8e ; 11) situé à distance du système de détection d'événement (6), et
(iv) appliquer l'un d'une pluralité de graphiques au signal de télévision au moyen de l'élément d'application de graphique (8 ; 8a, 8b, 8c, 8d, 8e ; 11) pour produire un signal de télévision modifié, où le type de signal déclencheur (7) reçu détermine le type de graphique appliqué et son contenu, et
(v) diffuser ultérieurement le signal de télévision modifié à destination d'une pluralité de spectateurs.
